# EUROPEAN PATENT APPLICATION

(11) **EP 1 740 005 A1**
(43) Date of publication of application: **03.01.2007**
(21) Application number: 05734123.2
(22) Date of filing: 25.04.2005
(51) Int. Cl.: H04Q 7/38, H04B 1/69, H04L 1/16, H04L 29/08

(54) **BASE STATION APPARATUS**

(30) Priority: 07.05.2004 JP 2004138740
(71) Applicant: MATSUSHITA ELECTRIC INDUSTRIAL CO., LTD., Osaka 571-8501 (JP)
(72) Inventor: DUAN, Jinsong., c/o Matsushita El.Ind.Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/007823
(87) International publication number: WO 2005/109946

(57) **Abstract**

A base station apparatus wherein the increase of amount of control signals to be used for upstream line data transmission can be minimized to reserve the amount of possible transmission of data signals in addition to the control signals. In the apparatus, an ACK signal grouping part (108) uses a bit operation to add all of UE_ID information received from an ACK/NACK signal determining part (107) during a predetermined interval, thereby producing a unified signal. Also, a NACK signal grouping part (112) uses a bit operation to add all of UE_ID information received from the ACK/NACK signal determining part (107) during a predetermined interval, thereby producing a unified signal. An ACK signal addition part (110) and a NACK signal addition part (114) each produce a signal in which ACK information is added to the signal produced by the ACK signal grouping part (108) and produce a signal in which NACK information is added to the signal produced by the NACK signal grouping part (112).

## Description

### Technical Field

The present invention relates to a communication system and a base station apparatus, and, more particularly, relates to a base station apparatus that can minimize increase in the amount of control signals to a communication terminal apparatus from a base station apparatus for uplink data transmission and that can assure a transmittable amount of data signals other than control signals.

### Background Art

Progress is being made in increasing the downlink speed in the WCDMA (Wideband Code Division Multiple Access) scheme through the introduction of HSDPA (High Speed Downlink Packet Access). In WCDMA wireless communication schemes adopting HSDPA, error-correcting error control techniques are used in order to achieve high-qualitytransmission. Hybrid ARQ (Hybrid Automatic Repeat reQuest) is an example of one of these error control techniques.

In hybrid ARQ, the transmitting end and the receiving end are connected by way of a bi-directional propagation path, the transmitting end sends to the receiving end a packet containing a codeword generated by error detection encoding in an information bit, and the receiving end performs error detection. The receiving end returns to the transmitting end a receipt acknowledgement signal (Positive Acknowledgement, hereinafter referred to as "ACK signal") that indicates successful reception when an error is not detected in the received data, and returns to the transmitting end a retransmission request signal (Negative Acknowledgement, hereinafter referred to as "NACK signal") when an error is detected in the received data. The transmitting end retransmits the same packet upon receiving a NACK signal. The transmitting end repeats retransmitting the same packet until receiving an ACK signal.

On the other hand, progress is being made in research of various techniques for increasing the uplink speed, which is referred to as uplink enhancement, in conjunction with higher downlink speed, and a hybrid ARQ has been proposed for the uplink as well (see non-patent document 1).

The procedure described above is also performed in the hybrid ARQ of a WCDMA uplink. Specifically, the communication terminal apparatus transmits a packet to the base station apparatus, and the base station apparatus receives the packet and detects errors. The base station apparatus returns an ACK signal to the communication terminal apparatus when an error is not detected in the received data, and returns a NACK signal when an error is detected in the received data.

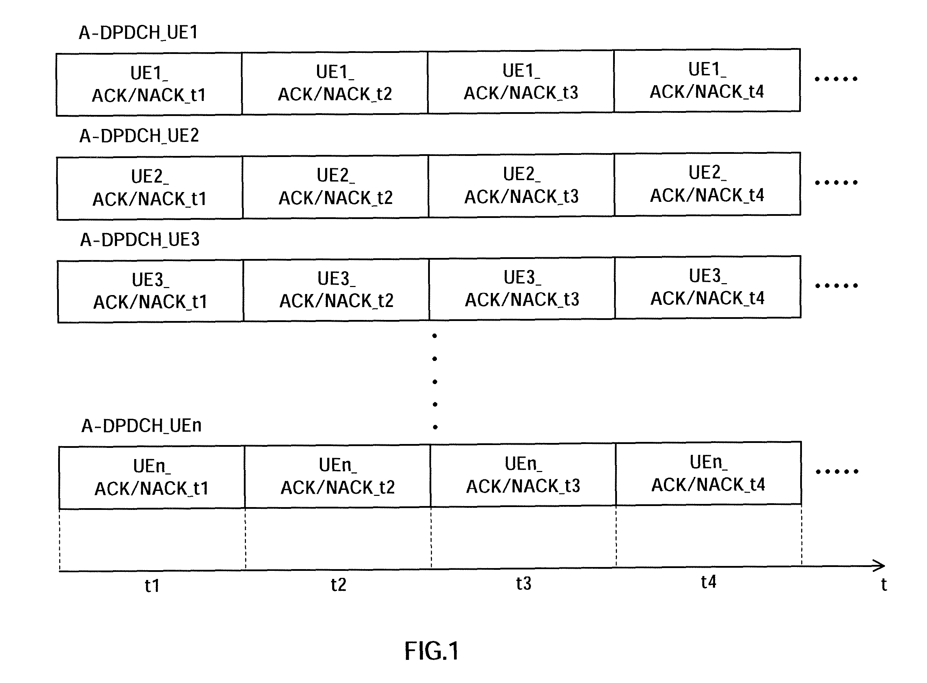

At this time, the base station apparatus spreads data over a plurality of communication terminal apparatuses (UE1 to UEn) at the station by using mutually different channels (A - DPDCH_UE1 to n), i.e., spreading codes that are different in each of the communication terminal apparatuses, and returns an ACK or NACK signal, as shown in FIG.1. The communication terminal apparatuses retransmit the same packet if a NACK signal is received, and repeatedly sends the same packet until an ACK signal is received. High quality transmissions can thereby be achieved. The base station apparatus can also return an ACK or NACK signal by using a different frequency band in each of the communication terminal apparatuses.
Non-patent document 1: 3GPP RAN1 TR25.896 (Standardization Related to Uplink Enhancement)

### Disclosure of Invention

### Problems to be Solved by the Invention

However, in the WCDMA uplink hybrid ARQ described above, the base station apparatus returns a control signal, i.e., an ACK or NACK signal using a different channel to each of the accommodated communication terminal apparatuses. Therefore, there is a problem in that the amount of data signals that can be transmitted is reduced by the increase in the amount of control signals. This problem also occurs, for example, with control signals and other signals used when a base station apparatus controls the transmission rate of a communication terminal apparatus.

The present invention was contrived in view of the above discussion, and an object of the present invention is to provide a base station apparatus that can minimize an increase in the amount of control signals to a communication terminal apparatus from a base station apparatus for uplink data transmission, and that can assure a transmittable amount of data signals other than control signals.

### Means for Solving the Problem

In accordance with one aspect of the present invention, a base station apparatus controls data transmission of a communication terminal apparatus based on a control content of control signals transmitted to the communication terminal apparatus, and this base station apparatus employs a configuration having: a signal generation section that generates signals in which terminal identification information that identifies a communication terminal apparatus, which is a destination of the control signals, are brought together into one, for each of the control content in each predetermined time period; an addition section that generates control content added signals by adding the control content to the signals generated; and a transmission section that transmits at shifted times the control content added signals generated.

In accordance with another aspect of the present invention, a base station apparatus controls data transmission of a communication terminal apparatus based on a control content of control signals transmitted to the communication terminal apparatus, and this base station apparatus employs a configuration having: an addition section that generates control content added terminal information by adding said control content to terminal identification information that identifies a communication terminal apparatus, which is a destination of said control signals; a signal generation section that generates signals in which said control content added terminal information is brought together into one in each predetermined time period; and a transmission section that transmits signals generated by said signal generation section.

### Advantageous Effect of the Invention

According to the present invention, the base station apparatus generates a signal in which control content and terminal identification information that identifies a communication terminal apparatus, which is the destination of control signals, are brought together in one in each prescribed time period, transmits the generated signal to the communication terminal apparatus, and controls the transmission of the transmission data to the base station apparatus of the communication terminal apparatus. Therefore, a base station apparatus can be provided that can minimize an increase in the amount of control signals to a communication terminal apparatus from the base station apparatus for uplink data transmission, and that can assure a transmittable amount of data signals other than control signals.

### Brief Description of Drawings

FIG.1 is a diagram describing a situation in which a conventional base station apparatus is transmitting control signals to communication terminal apparatuses;
FIG.2 is a block diagram showing an overall configuration of the communication system of a first embodiment of the present invention;
FIG.3 is a block diagram showing the configuration of the base station apparatus of the first embodiment;
FIG.4 is an image diagram of the output state of a modulated signal;
FIG.5 is a block diagram showing the configuration of the communication terminal apparatus of the first embodiment;
FIG.6 is a diagram showing the flow for conversion to orthogonal codes;
FIG.7 is a block diagram showing another configuration of the base station apparatus of the first embodiment;
FIG.8 is a block diagram showing another configuration of the communication terminal apparatus of the first embodiment;
FIG.9 is a block diagram showing a configuration of the base station apparatus of a second embodiment;
FIG.10 is a block diagram showing a configuration of the communication terminal apparatus of the second embodiment;
FIG.11 is a block diagram showing another configuration of the base station apparatus of the second embodiment; and
FIG.12 is a block diagram showing another configuration of the communication terminal apparatus of the second embodiment.

### Best Mode for Carrying Out the Invention

Now, embodiments of the present invention will be described in detail below with reference to the accompanying drawings.

### (First embodiment)

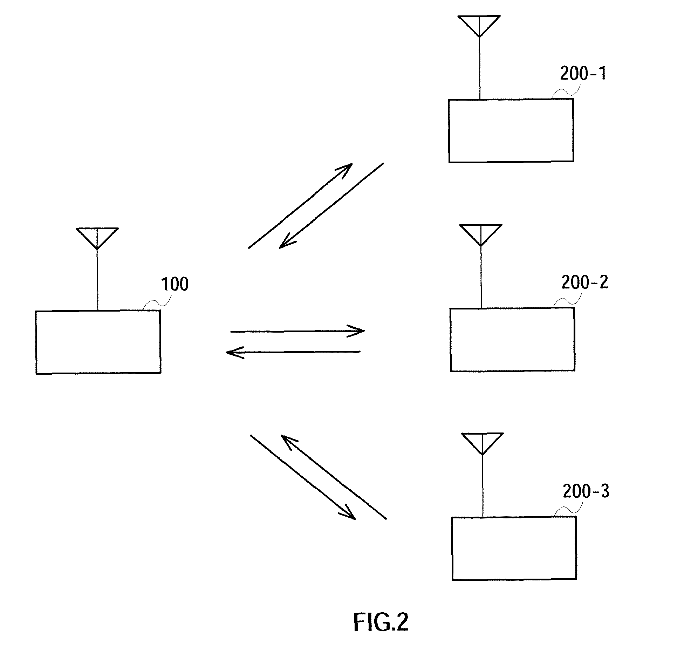

FIG.2 is a block diagram showing an overall configuration of the communication system according to the present embodiment. In this communication system, wireless communication is designed to be carried out between base station apparatus 100 and communication terminal apparatuses 200-1 to 200-3 accommodated by base station apparatus 100, as shown in FIG.2. For convenience, FIG.2 shows a state in which three communication terminal apparatuses are accommodated by base station apparatus 100.

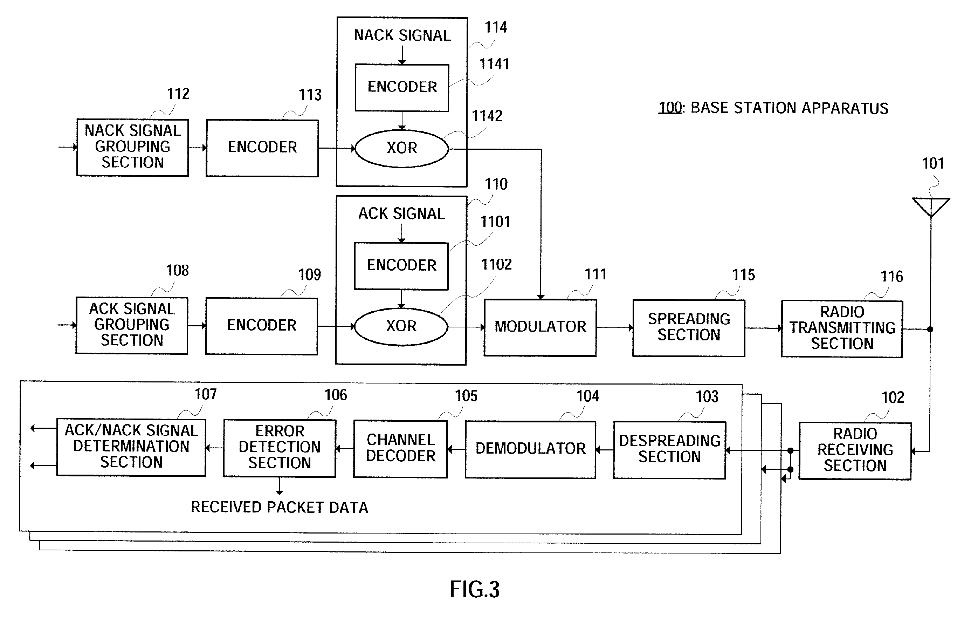

FIG.3 is a block diagram showing the configuration of base station apparatus 100. The operation of each of the components of base station apparatus 100 will be described below with reference to FIG.3.

Radio receiving section 102 converts radio frequency signals received by antenna 101 to baseband digital signals, and outputs the result to despreading section 103.

The same number of despreading sections 103 are provided as there are communication terminal apparatuses carrying out wireless communications. Despreading section 103 despreads baseband signals that have been received, extracts packet signals transmitted from the communication terminal apparatuses, and outputs the packet signals to demodulation section 104.

The same number of demodulation sections 104 are provided as there are communication terminal apparatuses carrying out wireless communications. Demodulation section 104 demodulates the packet signals that are outputted from the corresponding despreading section 103, and outputs the demodulated signals to channel decoding section 105.

The same number of channel decoding sections 105 are provided as there are communication terminal apparatuses carrying out wireless communications. Channel decoding section 105 carries out error correction decoding and other decoding processes on demodulated signals that are outputted from demodulation section 104, extracts received packet data, and outputs the packet data to error detection section 106.

The same number of error detection sections 106 are provided as there are communication terminal apparatuses carrying out wireless communications. Error detection section 106 detects errors in the received packet data that are outputted from channel decoding section 105. When an error is not detected, error detection section 106 outputs the received packet data to the host station, and also outputs to ACK/NACK signal determination section 107 an ACK signal indicating successful demodulation. Conversely, when an error is detected, error detection section 106 outputs to ACK/NACK signal determination section 107 a NACK signal indicating unsuccessful demodulation.

The same number of ACK/NACK signal determination sections 107 are provided as there are communication terminal apparatuses carrying out wireless communications. When an ACK signal is received from error detection section 106, the ID information (UE_ID information) of the communication terminal apparatus that transmitted the packet data, which has undergone error detection in error detection section 106, is outputted to ACK signal grouping section 108. Conversely, when a NACK signal is received from error detection section 106, the ID information (UE_ID information) of the communication terminal apparatus that transmitted the packet data, which has undergone error detection in error detection section 106, is outputted to NACK signal grouping section 112. Generally, the UE_ID information is uniquely assigned by the host layer radio network controller (RNC) to each of the communication terminal apparatuses currently in communication.

ACK signal grouping section 108 brings together into one all of the UE_ID information received from ACK/NACK signal determination section 107 in a prescribed period of time by using logical addition (OR), addition (+), or other bit operations, and outputs the generated group UE_ID information to encoding section 109.

Encoding section 109 performs error correction encoding and other encoding processes on the group UE_ID information, and outputs the signal obtained by the encoding processes to ACK signal addition section 110.

In ACK signal addition section 110, encoding section 1101 performs error correction encoding and other encoding processes on a predetermined bit sequence (e.g., 1111) that indicates an ACK signal. XOR section 1102 performs an exclusive OR (XOR) operation on the above group UE_ID information and the signal obtained by encoding processes in encoding section 1101, and outputs the ACK group UE_ID information obtained by this operation to modulation section 111.

NACK signal grouping section 112 brings together into one all of the UE_ID information received from ACK/NACK signal determination section 107 in a prescribed period of time by using logical addition (OR), addition (+), or other bit operations, and outputs the generated group UE_ID information to encoding section 113.

Encoding section 113 performs error correction encoding and other encoding processes on the group UE_ID information, and outputs the signal obtained by the encoding processes to NACK signal addition section 114.

In NACK signal addition section 114, encoding section 1141 performs error correction encoding and other encoding processes on a predetermined bit sequence (e.g., 0000) that indicates a NACK signal. Then, XOR section 1142 performs an exclusive OR (XOR) operation on the above group UE_ID information and the signal obtained by encoding processes in encoding section 1141, and outputs NACK group UE_ID information obtained by the operation to modulation section 111.

Modulation section 111 modulates the ACK group UE_ID information from ACK signal addition section 110 and the NACK group UE_ID information from NACK signal addition section 114, and outputs at shifted times each of the modulated signals to corresponding spreading section 115.

Spreading section 115 spreads the output signals of modulation section 111 and outputs the result to radio transmitting section 116.

Radio transmitting section 116 up-converts the output signals of spreading section 115 to a radio frequency, and wirelessly transmits the signals from antenna 101.

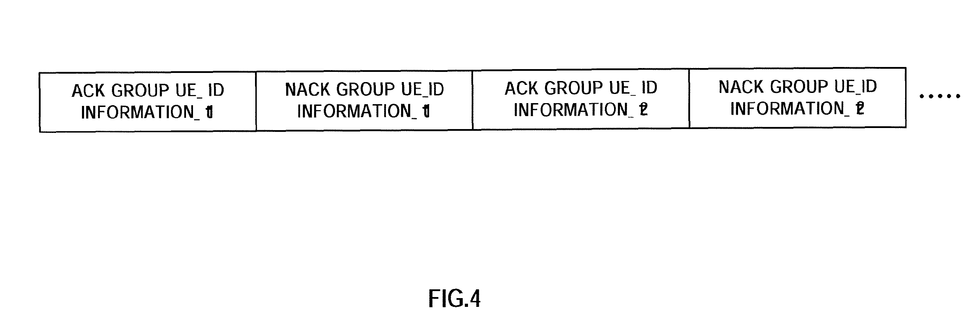

FIG.4 is an image diagram of the output state of a modulated signal outputted from modulation section 111. As shown in FIG.4, the ACK group UE_ID information_t1 and the NACK group UE_ID information_t1, generated based on the group UE_ID information, which is brought together into one in a prescribed time period t1 that has been set in ACK signal grouping section 108 and NACK signal grouping section 112, and are outputted to spreading section 115 by modulation section 111 at shifted times. The same applies to the prescribed time periods t2, t3, and so forth, that come after the prescribed time period t1.

The ACK group UE_ID information_tn and the NACK group UE_ID information_tn are outputted at shifted times in this manner, and channels do not therefore need to be provided for each ACK and NACK, allowing ACK and NACK to be transmitted in a single channel.

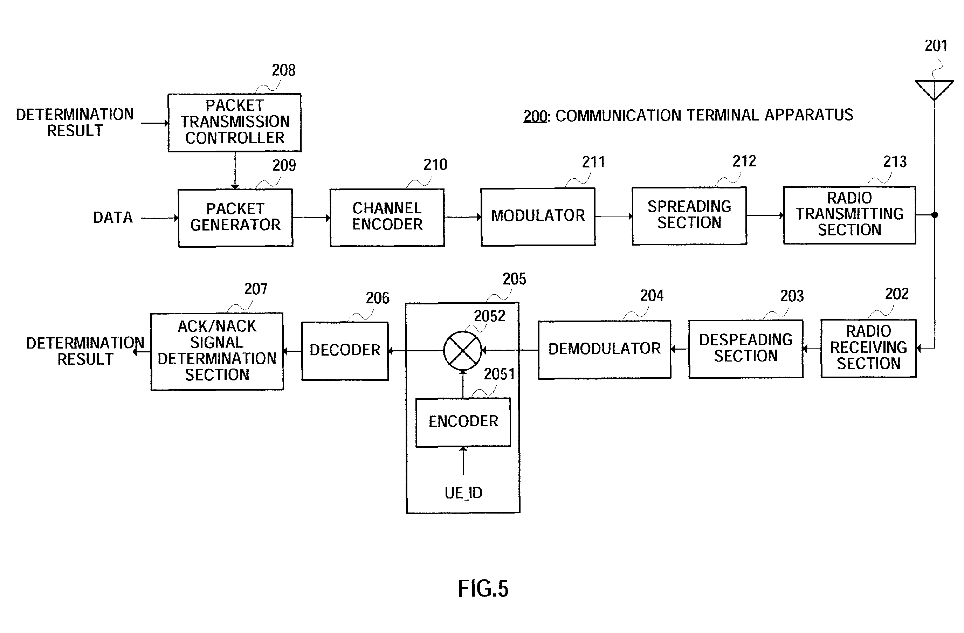

FIG. 5 is a block diagram showing the configuration of communication terminal apparatus 200. The operation of each of the components of communication terminal apparatus 200 will be described below with reference to FIG.5.

Radio receiving section 202 converts radio frequency signals received by antenna 101 to baseband digital signals, and outputs the result to despreading section 203.

Despreading section 203 despreads baseband signals that have been received, extracts signals transmitted from base station apparatus 100, and outputs the signals to demodulation section 204.

Demodulation section 204 demodulates the output signals of despreading section 203, and outputs the demodulated signals to UE_ID multiplying section 205.

In UE_ID multiplying section 205, encoding section 2051 performs the same process on the UE_ID information of the communication terminal apparatus as the encoding process performed by encoding sections 109 and 113 of base station apparatus 100. UE_ID multiplying section 2052 multiplies the signal obtained by encoding processes in encoding section 2051 and the signal outputted from demodulation section 204, and outputs the signal obtained by multiplication to decoding section 206.

Decoding section 206 decodes the output signals from UE_ID multiplying section 205 in a manner corresponding to the encoding processes used in encoding section 1101 and encoding section 1141 of base station apparatus 100, and outputs the signals obtained by the decoding process to ACK/NACK signal determination section 207.

ACK/NACK signal determination section 207 determines, based on an output signal from decoding section 206, whether anACK signal or NACK signal addressed to the communication terminal apparatus has been delivered. Specifically, when an ACK signal or NACK signal addressed to the communication terminal apparatus has been delivered, the correlation of the two signals multiplied together in multiplying section 2052 becomes maximum. Therefore, when the absolute value of the electric power at the peak of the electric power of the output signal from decoding section 206 is greater than a prescribed threshold value, a determination is made that an ACK signal or NACK signal addressed to the communication terminal apparatus has been delivered. ACK/NACK signal determination section 207 determines that an ACK signal addressed to the communication terminal apparatus has been delivered when, for example, the value of the electric power at the peak of the electric power of the output signal from decoding section 206 is a positive value, and determines that a NACK signal addressed to the communication terminal apparatus has been delivered when the value is a negative value. ACK/NACK signal determination section 207 outputs the determination result to packet transmission control section 208.

Packet transmission control section 208 first outputs a packet transmission command signal to packet generation section 209 when communication terminal apparatus 200 initiates packet transmission. Packet transmission control section 208 outputs the next packet transmission command signal to packet generation section 209 when the determination result from ACK/NACK signal determination section 207 indicates that an ACK signal addressed to the communication terminal apparatus has been delivered. On the other hand, packet transmission control section 208 outputs a packet retransmission command signal to packet generation section 209 when the determination result from ACK/NACK signal determination section 207 indicates that a NACK signal addressed to the communication terminal apparatus has been delivered.

Packet generation section 209 generates a packet from a series of transmission data. When a packet transmission command signal from packet transmission control section 208 is received, packet generation section 209 retains the first packet and outputs a copy of the packet to channel encoding section 210. When the next packet transmission command signal is received from packet transmission control section 208, packet generation section 209 erases the retained packet, a copy of which has been outputted, retains the next packet, and outputs a copypf the packet to channel encoding section 210. When a packet retransmission command signal is received from packet transmission control section 208, packet generation section 209 continues to retain the packet that is being held and outputs a copy of the packet to channel encoding section 210 again.

Channel encoding section 210 performs error correction encoding and other encoding processes on the packet data from packet generation section 209, and outputs the result to modulation section 211.

Modulation section 211 modulates the output signal of channel encoding section 210 and outputs the modulated signal to spreading section 212.

Spreading section 212 spreads the output signal of spreading section 212 and outputs the spread signal to radio transmitting section 213.

Radio transmitting section 213 up-converts the output signal of spreading section 212 to a radio frequency and wirelessly transmits the signal from antenna 201.

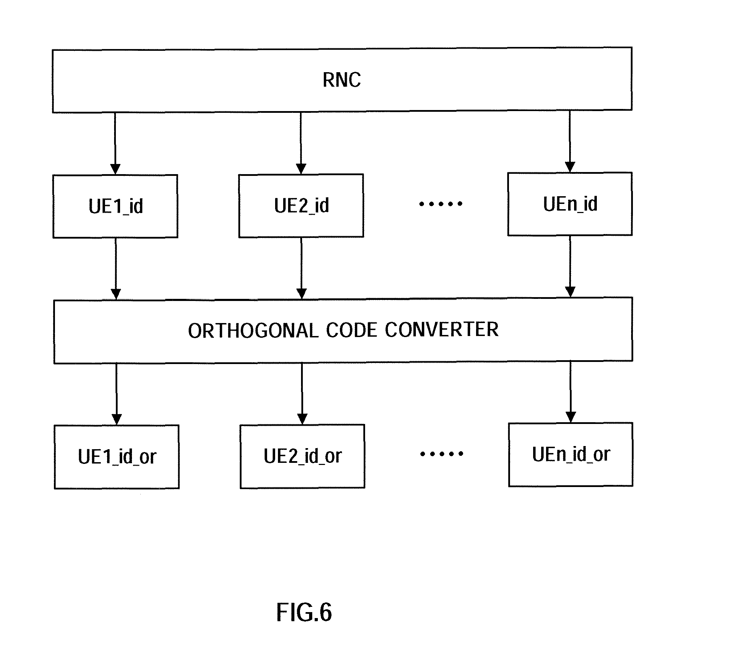

In the description above, the UE_ID information uniquely assigned from the RNC to each of the communication terminal apparatuses currently in communication was used as is, but it is possible to use the UE_ID_OR information in which the UE_ID information is converted to orthogonal code, as shown in FIG.6. In this case, the base station apparatus and the communication terminal apparatuses have a set of codes that are mutually orthogonal (hereinafter referred to as "orthogonal codes"), and the base station apparatus and communication terminal apparatuses must have a shared logic that ties together the UE_ID information and the orthogonal codes, i.e., the UE_ID_OR information.

Thus, in accordance with the present embodiment, ACK signal grouping section 108 generates a signal in which all of the UE_ID information received from ACK/NACK signal determination section 107 in a prescribed period of time is brought together into one by using logical addition (OR), addition (+), or other bit operations, and NACK signal grouping section 112 generates a signal in which all of the UE_ID information received from ACK/NACK signal determination section 107 in a prescribed period of time is brought together into one by using logical addition (OR), addition (+), or other bit operations. ACK signal addition section 110 generates a signal where ACK information is added to the signal generated by ACK signal grouping section 108, and NACK signal addition section 114 generates a signal where NACK information is added to the signal generated by NACK signal grouping section 112. The signals to which ACK or NACK information is added are transmitted to communication terminal apparatus 200 at shifted times.

In other words, the base station apparatus generates a signal (group UE_ID information) in which terminal identification information (UE_ID information) that identifies a communication terminal apparatus, which is the destination of control signals (ACK signal or NACK signal), are brought together into one for each control content (ACK or NACK) in each prescribed time period, generates control-content added signals (ACK group UE_ID information or NACK group UE_ID information) by adding control content (ACK or NACK) to each of the single consolidated signals, and transmits to communication terminal apparatus 200 at shifted times the generated signals to which control content is added.

In communication terminal apparatus 200, on the other hand, decoding section 206 decodes the output signal from UE_ID multiplying section 205 in a manner that corresponds to the encoding process carried out in encoding sections 1101 and 1141 of base station apparatus 100, and, based on the signal thus obtained, ACK/NACK signal determination section 207 determines whether an ACK signal or NACK signal addressed to the communication terminal apparatus has been delivered. Based on this determination result, packet transmission control section 208 performs transmission control for the packet transmission to base station apparatus 100.

In other words, the communication terminal apparatus determines the control content (ACK or NACK) of the signal transmitted from the base station apparatus and determines whether the signal transmitted from the base station apparatus is addressed to the communication terminal apparatus, based on the terminal identification information (UE_ID information) of the communication terminal apparatus, and controls the transmission of transmission data to the base station apparatus based on these determination results.

In this manner, the channels for transmitting control signals can be brought together into one because each of the control signals no longer needs to be transmitted to each of the communication terminal apparatuses. Also, since the control signals to the communication terminal apparatuses can be brought together into one, an increase in the amount of control signals in an uplink hybrid ARQ can be suppressed, so that the amount of data signals other than control signals that can be transmitted can be assured.

In the description above, a method of transmitting control signals from the base station apparatus to the communication terminal apparatuses was described. In this method, the terminal identification information for identifying the communication terminal apparatus to which control signals are to be transmitted is brought together into one for each control signal content, the content of the control signal is added to this signal and transmitted, and the control signal is used as the ACK and NACK of the hybrid ARQ. This method is non-limiting, however. For example, the transmission method can also be used in transmitting scheduling information for controlling the transmission rate and other parameters of the communication terminal apparatuses. The operation of each of the components of the base station apparatus and the communication terminal apparatuses in the communication system in such a case will be described with reference to FIG's.7 and 8.

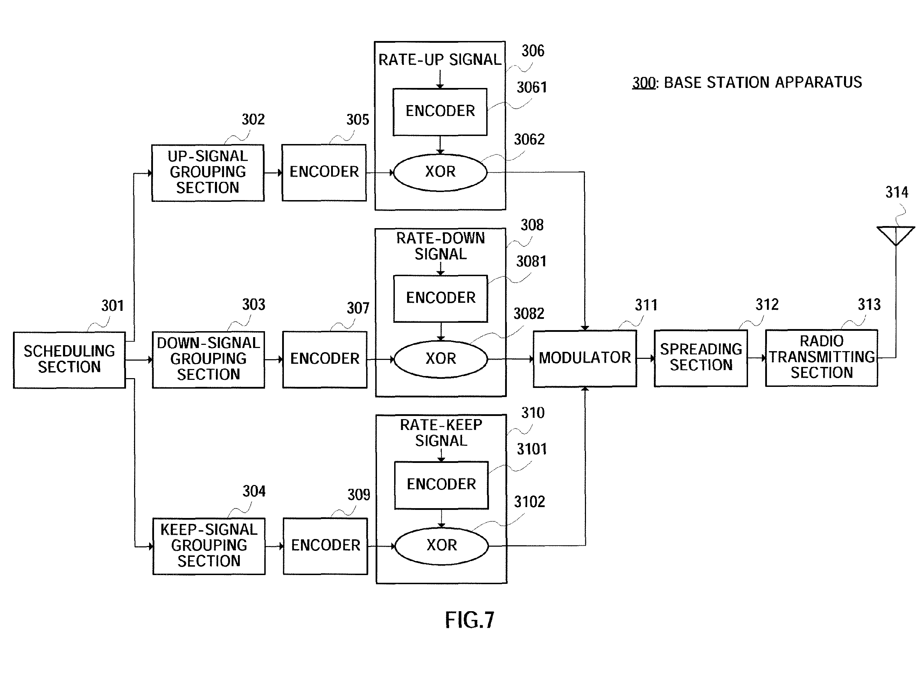

FIG.7 is ablockdiagramshowingthe configuration of base station apparatus 300.

Scheduling section 301 carries out scheduling based on the RoT (Rise over Thermal noise) in the cell of base station apparatus 300, for example, in order to control the transmission rate of the communication terminal apparatuses accommodated in the cell. Specifically, when the transmission rate of a particular communication terminal apparatus is to be increased, scheduling section 301 outputs the UE_ID information for identifying the communication terminal apparatus to up-signal grouping section 302. In a similar manner, when the transmission rate of a particular communication terminal apparatus is to be decreased, scheduling section 301 outputs the UE_ID information of the communication terminal apparatus to down-signal grouping section 303. Also, when the transmission rate of a particular communication terminal apparatus is to be kept, scheduling section 301 outputs the UE_ID information of the communication terminal apparatus to keep-signal grouping section 304.

Up-signal grouping section 302 brings together into one all of the UE_ID information received from scheduling section 301 in a prescribed period of time by using logical addition (OR), addition (+), or other bit operations, and outputs the group UE_ID information obtained by this operation to encoding section 305.

Encoding section 305 carries out error correction encoding and other encoding processes on the group UE_ID information, and outputs the signal obtained by the encoding process to rate-up signal addition section 306.

In rate-up signal addition section 306, encoding section 3061 performs error correction encoding and other encoding processes on a prescribed bit sequence that represents a rate-up signal. XOR section 3062 performs an exclusive OR (XOR) operation on the above-described group UE_ID information and the signal obtained by encoding processes in encoding section 3061, and outputs the rate-up group UE_ID information obtained by this operation to modulation section 311.

Down-signal grouping section 303 brings together into one all of the UE_ID information received from scheduling section 301 in a prescribed period of time by using logical addition (OR), addition (+), or other bit operations, generates group UE_ID information, and outputs the information to encoding section 307.

Encoding section 307 carries out error correction encoding and other encoding processes on the group UE_ID information, and outputs the signal obtained by the encoding process to rate-down signal addition section 308.

In rate-down signal addition section 308, encoding section 3081 performs error correction encoding and other encoding processes on a prescribed bit sequence that represents a rate-down signal. XOR section 3082 performs an exclusive OR (XOR) operation on the above-described group UE_ID information and the signal obtained by encoding processes in encoding section 3081, and outputs the rate-down group UE_ID information obtained by this operation to modulation section 311.

Keep-signal grouping section 304 brings together into one all of the UE_ID information received from scheduling section 301 in a prescribed period of time by using logical addition (OR), addition (+), or other bit operations, and outputs the group UE_ID information obtained by this operation to encoding section 309.

Encoding section 309 carries out error correction encoding and other encoding processes on the group UE_ID information, and outputs the signal obtained by the encoding process to rate-keep signal addition section 310.

In rate-keep signal addition section 310, encoding section 3101 performs error correction encoding and other encoding processes on a prescribed bit sequence that represents a rate-keep signal. XOR section 3102 performs an exclusive OR (XOR) operation on the above-described group UE_ID information and the signal obtained by encoding processes in encoding section 3101, and outputs the rate-keep group UE_ID information obtained thus to modulation section 311.

Modulation section 311 modulates the rate-up group UE_ID information from rate-up signal addition section 306, the rate-down UE_ID information from the rate-down signal addition section 308, and the rate-keep UE_ID information from rate-keep signal addition section 310, and outputs each of the modulated signals to spreading section 312 at shifted times.

Spreading section 312 spreads the output signal of modulation section 311 and outputs the result to radio transmitting section 313.

Radio transmitting section 313 up-converts the output signals of spreading section 312 to a radio frequency, and wirelessly transmits the signals from antenna 314.

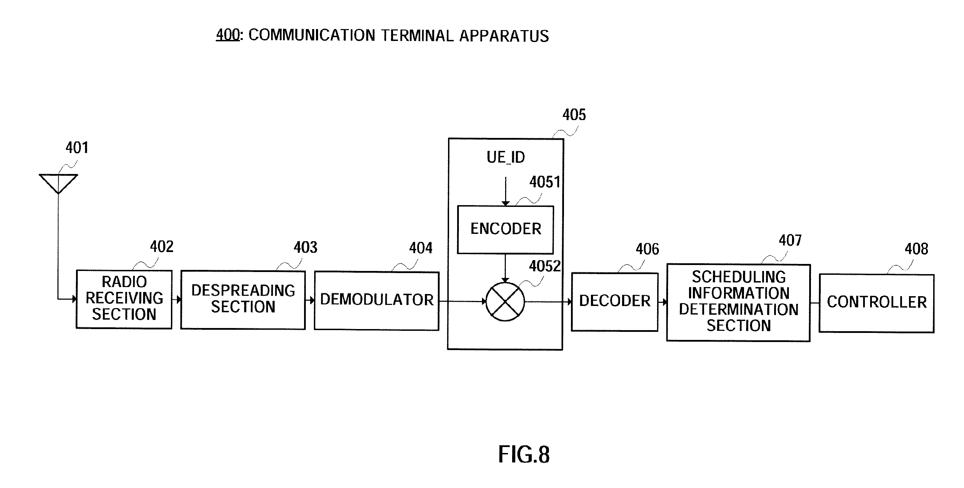

FIG.8 is a block diagram showing another configuration of communication terminal apparatus 400.

Radio receiving section 402 converts radio frequency signals received by antenna 401 to baseband digital signals, and outputs the result to despreading section 403.

Despreading section 403 despreads baseband signals that have been received, extracts signals transmitted from base station apparatus 300, and outputs the signals to demodulation section 404.

Demodulation section 404 demodulates the output signals of despreading section 403, and outputs the demodulated signals to UE_ID multiplying section 405.

In UE_ID multiplying section 405, encoding section 4051 encodes the UE_ID information of the communication terminal apparatus in the same manner as the encoding processes carried out in encoding sections 305, 307 and 309 of base station apparatus 300. Multiplying section 4052 multiplies the signal outputted from demodulation section 404 and the signal obtained by encoding processes in the encoding section 4051, and the signal obtained by multiplication is outputted to decoding section 406.

Decoding section 406 decodes the output signals from UE_ID multiplying section 405 in a manner corresponding to the encoding processes used in encoding sections 3061, 3081, and 3101 of base station apparatus 300, and the signals obtained by the decoding process are outputted to scheduling information determination section 407.

Scheduling information determination section 407 determines based on the output signal from decoding section 406 whether a scheduling signal (in this case, a rate-up, rate-down, or rate-keep) addressed to the communication terminal apparatus has been delivered. Specifically, when a scheduling signal addressed to the communication terminal apparatus has been delivered, the correlation of the two signals multiplied together in multiplying section 4052 increases. Therefore, when the absolute value of the electric power at the peak of the electric power of the output signal from decoding section 406 is greater than a prescribed threshold value, a determination is made that the scheduling signal addressed to the communication terminal apparatus has been delivered. Scheduling information determination section 407 determines whether the content of the scheduling signal addressed to the communication terminal apparatus is a rate-up, rate-down, or rate-keep signal by decoding the output signal from decoding section 406.

Control section 408 controls the transmission rate of the data transmission to the base station apparatus based on the result of the determination.

In accordance with the present embodiment described above, the base station apparatus generates a signal in which terminal identification information that identifies a communication terminal apparatus, which is the destination of control signals, are brought together into one for each control content in each prescribed time period, generates control content added signals by adding control content to each of the single consolidated signals, and transmits to the communication terminal apparatus at shifted times the generated signals to which control content is added. The communication terminal apparatus, on the other hand, determines the control content of the signal transmitted from the base station apparatus, determines whether the signal transmitted from the base station apparatus is addressed to the communication terminal apparatus based on the terminal identification information of the communication terminal apparatus, and controls the data transmission to the base station apparatus based on these results of the determination.

In this fashion, the channels for transmitting the control signals can be brought together into one because the control signals do not need to be individually transmitted to each of the communication terminal apparatuses. Also, since the control signals to the communication terminal apparatus can be brought together into one, an increase in the amount of control signals for uplink data transmission can be suppressed, so that the transmittable amount of data signals other than control signals can be assured.

### (Second embodiment)

The communication system according to the present embodiment has the same basic configuration as the communication system of the first embodiment, and comprises base station apparatus 600 and communication terminal apparatus 700 accommodated by base station apparatus 600.

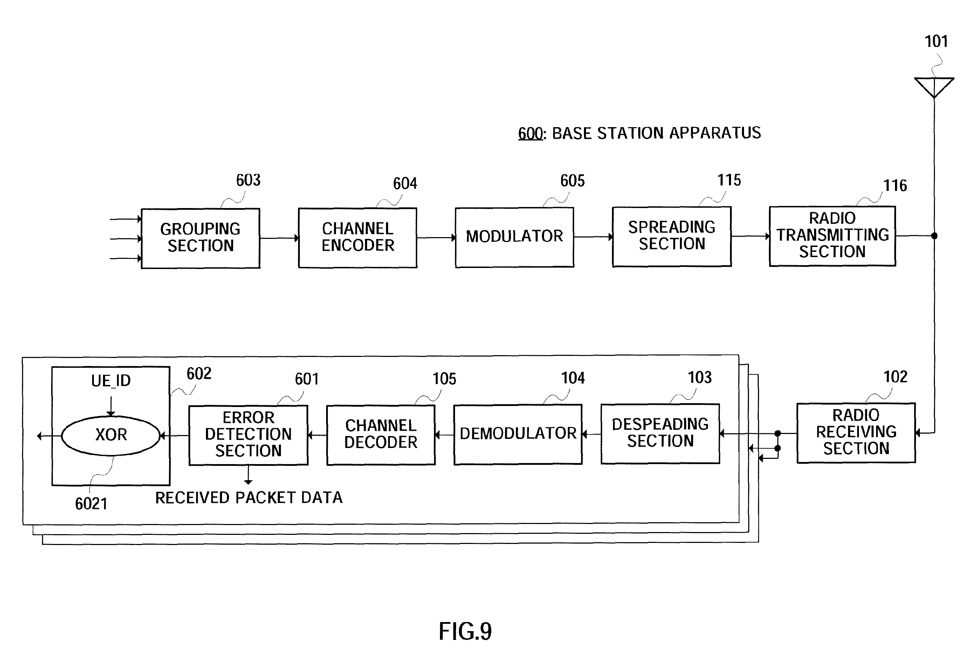

FIG.9 is a block diagram showing a configuration of base station apparatus 600. The same reference numerals are used for the same components as base station apparatus 100 of the first embodiment, and descriptions thereof will be omitted.

Error detection section 601 detects errors in the received packet data that are outputted from channel decoding section 105. When an error is not detected, error detection section 601 outputs the received packet data to a higher station and also outputs to UE_ID addition section 602 an ACK signal indicating successful demodulation. Conversely, when an error is detected, error detection section 601 outputs to UE_ID addition section 602 a NACK signal indicating unsuccessful demodulation. This ACK signal is a predetermined bit sequence (e.g., 1111) that indicates an ACK signal, and the NACK signal is also apredeterminedbit sequence (e. g. , 0000) that indicates a NACK signal.

In UE_ID addition section 602, XOR section 6021 performs an exclusive OR (XOR) operation on the user equipment ID information (UE_ID information) of the communication terminal apparatus and the ACK or NACK signal that has been outputted from error detection section 601, and outputs to grouping section 603 the ACK/UE_ID information or the NACK/UE_ID information obtained by this operation. XOR section 6021 may perform an AND operation (x) rather than an exclusive OR operation (XOR).

Grouping section 603 brings together into one all of the ACK/UE_ID information and NACK/UE_ID information received from UE_ID addition section 602 in a prescribed period of time by using logical addition (OR), addition (+), or other bit operations, and outputs the group UE_ID information obtained by this operation to channel encoding section 604.

Channel encoding section 604 performs error correction encoding and other encoding processes on the group UE_ID information from grouping section 603, and outputs the signal obtained by the encoding processes to modulation section 605.

Modulation section 605 modulates the signal that is outputted from channel encoding section 604 and outputs the modulated signal to spreading section 115.

Spreading section 115 spreads the output signal of modulation section 605 and outputs the result to radio transmitting section 116.

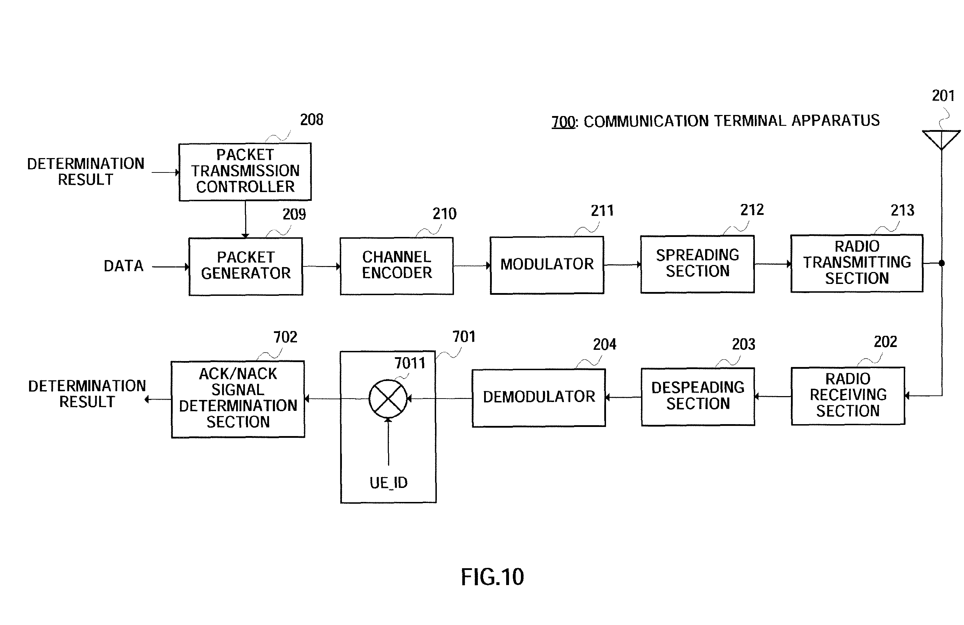

FIG.10 is a block diagram showing a configuration of communication terminal apparatus 700. The same reference numerals are used for the same components as communication terminal apparatus 200 of the first embodiment, and descriptions thereof will be omitted.

In UE_ID multiplying section 701, multiplying section 7011 multiplies the UE_ID information of the communication terminal apparatus and the output signal from demodulation section 204, and outputs the signal obtained by multiplication to ACK/NACK signal determination section 702. Multiplying section 7011 may perform either an AND operation (x) or an exclusive OR operation (XOR).

ACK/NACK signal determination section 702 determines based on an output signal from UE_ID multiplying section 701 whether an ACK signal or NACK signal addressed to the communication terminal apparatus has been delivered. Specifically, when an ACK signal or NACK signal addressed to the communication terminal apparatus has been delivered, the correlation of the two signals multiplied together in multiplying section 7011 increases. Therefore, when the absolute value of the electric power at the peak of the electric power of the output signal from UE_ID multiplying section 701 is greater than a prescribed threshold value, a determination is made that an ACK signal or NACK signal addressed to the communication terminal apparatus has been delivered. ACK/NACK signal determination section 702 determines that an ACK signal addressed to the communication terminal apparatus has been deliveredwhen, for example, the value of the electric power at the peak of the electric power of the output signal from UE_ID multiplying section 701 is a positive value, and determines that a NACK signal addressed to the communication terminal apparatus has been delivered when the value is a negative value. ACK/NACK signal determination section 702 outputs the determination result to packet transmission control section 208.

In accordance with the present embodiment described above, in base station apparatus 600, UE_ID addition section 602 performs an exclusive OR (XOR) operation on the ID information (UE_ID information) for the communication terminal apparatus and the ACK or NACK signal that has been outputted from error detection section 601, and generates the ACK/UE_ID information or NACK/UE_ID information obtained by this operation. Grouping section 603 generates a signal in which all of the ACK/UE_ID information and the NACK/UE_ID information received from UE_ID addition section 602 in a prescribed period of time is brought together into one by using logical addition (OR), addition (+), or other bit operations. The signal brought together into one is transmitted to communication terminal apparatus 700.

In other words, the base station apparatus generates a signal to which control content (ACK or NACK) is added to the terminal identification information (UE_ID information) that identifies communication terminal apparatus 700, which is the destination of the control signal (ACK signal or NACK signal), brings together the generated signals into one in each prescribed period of time to generate a signal, and transmits the signal to communication terminal apparatus 700.

In communication terminal apparatus 700, UE_ID multiplying section 701 multiplies the UE_ID information of the communication terminal apparatus and the signal outputted from demodulation section 204, and ACK/NACK signal determination section 702 determines whether an ACK signal or NACK signal addressed to the communication terminal apparatus has been delivered, based on the signal obtained by multiplication. Based on this determination result, packet transmission control section 208 performs transmission control for the packet transmission to base station apparatus 600.

In other words, the communication terminal apparatus determines the control content (ACK or NACK) of the signal transmitted from the base station apparatus, determines whether the signal transmitted from the base station apparatus based on the terminal identification information (UE_ID information) of the communication terminal apparatus are addressed to the communication terminal apparatus, and controls the transmission of transmission data to the base station apparatus based on the results of this determination.

In this manner, the channels for transmitting control signals can be brought together into one because each of the control signals no longer needs to be transmitted to each of the communication terminal apparatus. Also, since control signals for a plurality of communication terminal apparatuses are brought together into one, an increase in the amount of control signals can be suppressed in an uplink hybrid ARQ, so that the transmittable amount of data signals other than control signals can be assured.

In the description above, a method of transmitting control signals from the base station apparatus to the communication terminal apparatus was described. This method involves obtaining a single signal by bringing together signals to which the content of control signals is added to the terminal identification information for identifying the communication terminal apparatus to transmit control signals to. The control signal is the ACK and NACK of the hybrid ARQ. This method is non-limiting, however. For example, the transmission method can also be used in transmitting scheduling information for controlling the transmission rate and other parameters of communication terminal apparatus, and the operation of each of the components of the base station apparatus and the communication terminal apparatus in the communication system in such a case will be described with reference to FIG's.11 and 12.

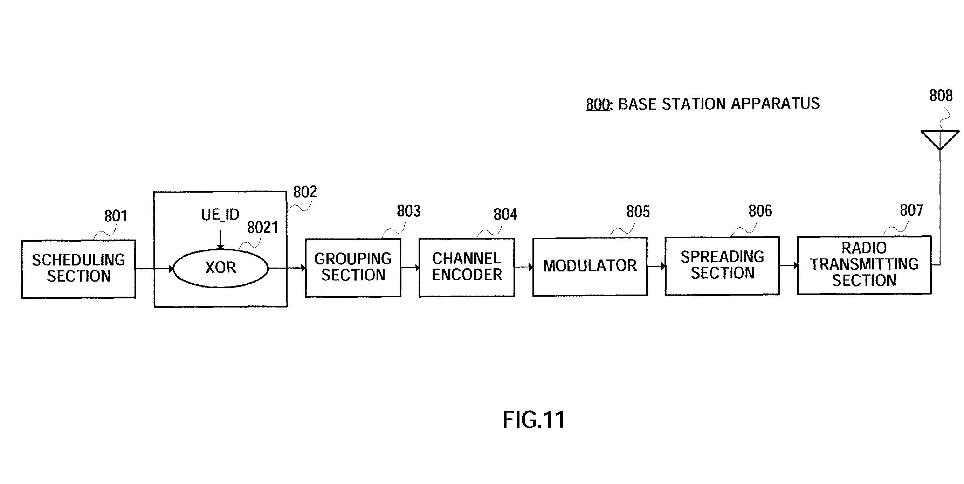

FIG.11 is a block diagram showing a configuration of this base station apparatus 800.

Scheduling section 801 carries out scheduling based on the RoT (Rise over Thermal noise) within the cells of base station apparatus 800, for example, in order to control the transmission rate of communication terminal apparatuses accommodated in the cell. Specifically, when the transmission rate of a particular communication terminal apparatus is to be increased (decreased, kept), scheduling section 801 outputs a rate-up (rate-down, rate-keep) signal to UE_ID addition section 802. The rate-up signal is a predetermined bit sequence (e.g., 11) that indicates a rate-up signal. The rate-down signal is a predetermined bit sequence (e.g., 00) that indicates a rate-up signal. The rate-keep signal is a predetermined bit sequence (e.g., 01) that indicates a rate-keep signal.

In UE_ID addition section 802, XOR section 8021 performs an exclusive OR (XOR) operation on the rate-up, rate-down or rate-keep signal outputted from scheduling section 801, and the user equipment ID information (UE_ID information), and outputs the rate-up/UE_ID information, rate-down/UE_ID information, or rate-keep/UE_ID information obtained by the operation to grouping section 803. XOR section 8021 may perform an AND operation (x) rather than an exclusive OR operation (XOR).

Grouping section 803 brings together into one all of the rate-up/UE_ID information, rate-down/UE_ID information, or rate-keep/UE_ID information received from UE_ID addition section 802 in a prescribed period of time by using logical addition (OR), addition (+), or other bit operations, and outputs the group/UE_ID information obtained by this operation to channel encoding section 804.

Channel encoding section 804 performs error correction encoding and other encoding processes on the group/UE_ID information from grouping section 803, and outputs the signal obtained by the encoding processes to modulation section 805.

Modulation section 805 modulates the signal outputted from channel encoding section 804 and outputs the modulated signal to spreading section 806.

Spreading section 806 spreads the output signal of modulation section 805 and outputs the result to radio transmitting section 807.

Radio transmitting section 807 up-converts the output signal of spreading section 806 to a radio frequency, and wirelessly transmits the signal from antenna 808.

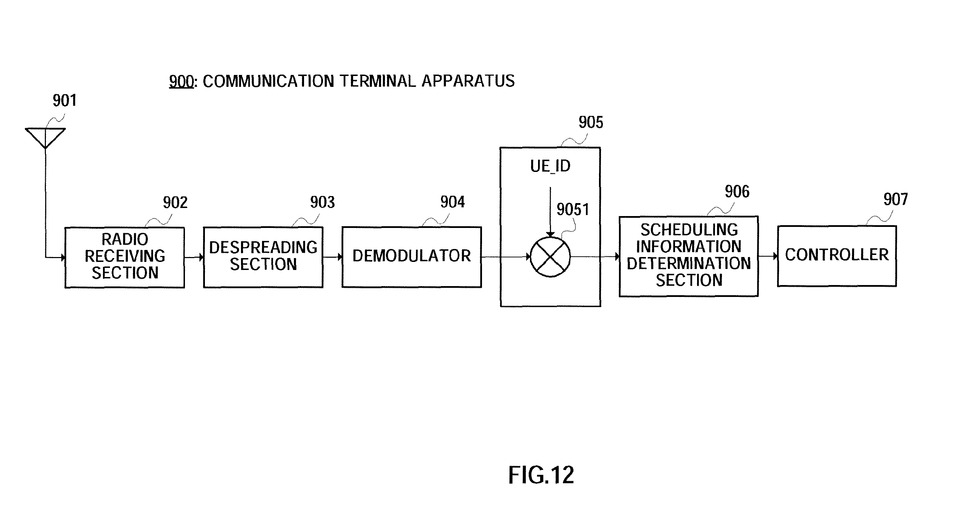

FIG.12 is a block diagram showing a configuration of communication terminal apparatus 900.

Radio receiving section 902 converts radio frequency signals received by antenna 901 to baseband digital signals, and outputs the result to despreading section 903.

Despreading section 903 despreads baseband signals that have been received, extracts signals transmitted from base station apparatus 800, and outputs the signals to demodulation section 904.

Demodulation section 904 demodulates the output signals of despreading section 903, and outputs the demodulated signals to UE_ID multiplying section 905.

In UE_ID multiplying section 905, multiplying section 9051 multiplies the UE_ID information of the communication terminal apparatus and the output signal from demodulation section 904, and outputs the signal obtained by multiplication to scheduling information determination section 906. Multiplying section 9051 may perform an AND operation (x) or an exclusive OR operation (XOR).

Scheduling information determination section 906 determines based on the output signal from UE_ID multiplying section 905 whether a scheduling signal (in this case, the rate-up, rate-down, or rate-keep) addressed to the communication terminal apparatus has been delivered. Specifically, when a scheduling signal addressed to the communication terminal apparatus has been delivered, the correlation of the two signals multiplied together in multiplying section 9051 increases. Therefore, when the absolute value of the electric power at the peak of the electric power of the output signal from UE_ID multiplying section 905 is greater than a prescribed threshold value, a determination is made that the scheduling signal addressed to the communication terminal apparatus has been delivered. Scheduling information determination section 906 determines whether the content of the scheduling signal addressed to the communication terminal apparatus is a rate-up, rate-down, or rate-keep by decoding the output signal from UE_ID multiplying section 905.

Control section 907 controls the transmission rate of the data transmission to the base station apparatus based on the result of the determination.

In accordance with the present embodiment, as described above, the base station apparatus generates signals in which the control content is added to the terminal identification information that identifies a communication terminal apparatus, which is the destination of control signals, generates a signal in which the generated signals are brought together as one in each prescribed time period, and transmits the signal to the communication terminal apparatus. The communication terminal apparatus, on the other hand, based on the terminal identification information of the communication terminal apparatus, determines the control content of the signal transmitted from the base station apparatus, determines whether the signal transmitted from the base station apparatus is addressed to the communication terminal apparatus, and controls the data transmission to the base station apparatus based on the results of the determination.

In this manner, the channels for transmitting control signals can be brought together to one because the control signals do not need to be individually transmitted to each of the communication terminal apparatuses. Also, since the control signals to the communication terminal apparatuses can be brought together into one, an increase in the amount of control signals for uplink data transmission can be suppressed, so that the transmittable amount of data signals other than control signals can be assured.

A first mode of the communication system of the present invention is a communication system that comprises a base station apparatus, and a plurality of communication terminal apparatuses transmitting transmission data to the base station apparatus based on a control content of control signals from the base station apparatus. The base station apparatus has: a signal generation section that generates signals in which terminal identification information that identifies a communication terminal apparatus, which is a destination of the control signals, are brought together into one, for each of the control content in each predetermined time period; an addition section that generates control content added signals by adding the control content to the signals generated; and a transmission section that transmits at shifted times the control content added signals generated. The communication terminal apparatuses have : a determination section that determines whether the control content added signal is addressed to the communication terminal apparatus on the basis of the terminal identification information and determines the control content of the control content added signal; and a transmission control section that controls the transmission of transmission data to the base station apparatus on the basis of the result of the determination.

In this manner, the channels for transmitting control signals can be brought together into one because each of the control signals no longer needs to be transmitted to each of the communication terminal apparatuses. Also, since the control signals to the communication terminal apparatuses can be brought together into one, an increase in the amount of control signals can be suppressed in an uplink hybrid ARQ, so that the amount of data signals other than control signals that can be transmitted can be assured.

A second mode of the communication system of the present invention is a communication system that comprises a base station apparatus, and a plurality of communication terminal apparatuses transmitting transmission data to the base station apparatus based on a control content of control signals from the base station apparatus. The base station apparatus has: an addition section that generates control content added terminal information by adding the control content to terminal identification information that identifies a communication terminal apparatus, which is a destination of the control signals; a signal generation section that generates signals in which the control content added terminal information is brought together into one in each predetermined time period; and a transmission section that transmits signals generated by the signal generation section. The communication terminal apparatuses have: a determination section that the control content of the signals transmitted by a transmission section of the communication terminal apparatuses and determines whether transmitted signals are addressed to the communication terminal apparatus based on the terminal identification information; and a transmission control section that controls the transmission of transmission data to the base station apparatus based on the result of the determination.

In this manner, the channels for transmitting the control signals can be brought together into one because the control signals do not need to be individually transmitted to each of the communication terminal apparatuses. Also, since the control signals to the communication terminal apparatuses can be brought together into one, an increase in the amount of control signals for uplink data transmission can be suppressed, so that the transmittable amount of data signals other than control signals can be assured.

In a third mode of the communication system of the present invention, the control content added by the addition section comprises a retransmission request or a receive confirmation of an automatic retransmission request.

In a fourth mode of the communication system of the present invention, the control content added by the addition section comprises content for increasing, decreasing or maintaining a data transmission rate to the communication terminal apparatus.

In accordance with a first mode of the base station apparatus of the present invention, the base station apparatus controls data transmission of a communication terminal apparatus based on control content of a control signal transmitted to the communication terminal apparatus, and employs a configuration having: a signal generation section that generates signals in which terminal identification information that identifies a communication terminal apparatus, which is a destination of the control signals, are brought together into one, for each of the control content in each predetermined time period; an addition section that generates control content added signals by adding the control content to the signals generated; and a transmission section that transmits at shifted times the control content added signals generated.

In this manner, the channels for transmitting the control signals can be brought together into one because the control signals do not need to be individually transmitted to each of the communication terminal apparatuses. Also, since the control signals to the communication terminal apparatuses can be brought together into one, an increase in the amount of control signals for uplink data transmission can be suppressed, so that the transmittable amount of data signals other than control signals can be assured.

In accordance with a second mode of the base station apparatus of the present invention, the base station apparatus controls data transmission of a communication terminal apparatus based on control content of control signals transmitted to the communication terminal apparatus, and employs a configuration having: an addition section that generates control content added terminal information by adding the control content to terminal identification information that identifies a communication terminal apparatus, which is a destination of the control signals; a signal generation section that generates signals in which the control content added terminal information is brought together into one in each predetermined time period; and a transmission section that transmits signals generated by the signal generation section.

In this manner, the channels for transmitting the control signals can be brought together into one because the control signals do not need to be individually transmitted to each of the communication terminal apparatuses. Also, since the control signals to the communication terminal apparatuses can be brought together into one, an increase in the amount of control signals for uplink data transmission can be suppressed, so that the transmittable amount of data signals other than control signals can be assured.

In a third mode of the base station apparatus of the present invention, the terminal identification information that identifies the communication terminal apparatus comprises orthogonal codes that are mutually orthogonal.

In a fourth mode of the base station apparatus of the present invention, the control content added by the addition section is a retransmission request or a receive confirmation of an automatic retransmission request.

In a fifth mode of the base station apparatus of the present invention, the control content added by the addition section comprises content for increasing, decreasing or maintaining a data transmission rate to the communication terminal apparatus.

The present application is based on Japanese Patent Application No.2004-138740 filed on May 7, 2004 , the entire content of which is expressly incorporated herein by reference.

### Industrial Applicability

The present invention is suitable for use as a base station apparatus that can minimize an increase in the amount of control signals for uplink data transmission to a communication terminal apparatus from the base station apparatus, and that can assure a transmittable amount of data signals other than control signals.

## Claims

1. A base station apparatus for controlling data transmission of a communication terminal apparatus based on control content of a control signal transmitted to the communication terminal apparatus, said base station apparatus comprising:
a signal generation section that generates signals in which terminal identification information that identifies a communication terminal apparatus, which is a destination of said control signals, are brought together into one, for each of said control content in each predetermined time period;
an addition section that generates control content added signals by adding said control content to the signals generated; and
a transmission section that transmits at shifted times the control content added signals generated.

2. A base station apparatus for controlling data transmission of a communication terminal apparatus based on control content of control signals transmitted to the communication terminal apparatus, said base station apparatus comprising:
an addition section that generates control content added terminal information by adding said control content to terminal identification information that identifies a communication terminal apparatus, which is a destination of said control signals;
a signal generation section that generates signals in which said control content added terminal information is brought together into one in each predetermined time period; and
a transmission section that transmits signals generated by said signal generation section.

3. The base station apparatus according to claim 1, wherein the terminal identification information that identifies said communication terminal apparatus comprises orthogonal codes that are mutually orthogonal.

4. The base station apparatus according to claim 2, wherein the terminal identification information that identifies said communication terminal apparatus comprises orthogonal codes that are mutually orthogonal.

5. The base station apparatus according to claim 1, wherein said control content added by said addition section comprises a retransmission request or a receive confirmation of an automatic retransmission request.

6. The base station apparatus according to claim 2, wherein said control content added by said addition section comprises a retransmission request or a receive confirmation of an automatic retransmission request.

7. The base station apparatus according to claim 1, wherein said control content added by said addition section comprises content for increasing, decreasing or maintaining a data transmission rate to the communication terminal apparatus.

8. The base station apparatus according to claim 2, wherein said control content added by said addition section comprises content for increasing, decreasing or maintaining a data transmission rate to the communication terminal apparatus.
